(19) Europäisches Patentamt

European Patent Office

Office européen des brevets

(11) **EP 2 674 737 A2**

(12) **DEMANDE DE BREVET EUROPEEN**

(43) Date de publication:
**18.12.2013 Bulletin 2013/51**

(51) Int Cl.:
***G01K 17/20*** *(2006.01)*

(21) Numéro de dépôt: **13171936.1**

(22) Date de dépôt: **13.06.2013**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **14.06.2012 FR 1255595**

(71) Demandeur: **Ministère de l'Ecologie, du Développement Durable et de l'Energie 92055 La Défense Cedex (FR)**

(72) Inventeurs:
• **Deleersnyder, Laurent**
  **59160 LOMME (FR)**
• **Caudron, Cécile**
  **62860 ECOURT SAINT QUENTIN (FR)**
• **Tascedda, Marc**
  **59000 LILLE (FR)**

(74) Mandataire: **Chaillot, Geneviève et al Cabinet Chaillot 16-20 Avenue de l'Agent Sarre B.P. 74 92703 Colombes Cedex (FR)**

(54) **Procede et système de mesure du coefficient de transfert thermique pour un bâtiment ou un sous-ensemble du bâtiment**

(57)    L'invention a pour objet un procédé de mesure du coefficient de transfert thermique entre un sous-volume constitué d'un ou plusieurs locaux, contigus ou non, d'un bâtiment et l'extérieur dudit bâtiment, caractérisé par le fait qu'il comprend les opérations consistant à placer dans le sous-volume un moyen de chauffage/climatisation autonome et rapporté, placer un ou plusieurs dispositifs de mesure dans le sous-volume et à l'extérieur du bâtiment, placer le sous-volume à une température de consigne différente de la température de l'extérieur du bâtiment, et mesurer les différentes températures et la quantité d'énergie consommée par le moyen de chauffage/climatisation pour maintenir le sous-volume à la température de consigne dans des conditions de mesure dans lesquelles le bâtiment est inoccupé et aucun système du bâtiment ne consomme d'énergie, en dehors du moyen de chauffage/climatisation rapporté et des dispositifs de mesure. L'invention porte également sur un système pour mettre en oeuvre le procédé.

FIGURE 1

EP 2 674 737 A2

**Description**

La présente invention concerne le domaine du bâtiment, et porte plus particulièrement sur un procédé et un système de mesure du coefficient de transfert thermique pour un bâtiment ou un sous-ensemble du bâtiment.

Les engagements internationaux de nombreux pays ces dernières années pour réduire les consommations énergétiques et les rejets de gaz à effet de serre dans l'atmosphère ont placé de plus grandes exigences sur les performances énergétiques des bâtiments. La mesure des performances énergétiques des bâtiments est par conséquent un enjeu important pour déterminer si les bâtiments existants et les nouveaux bâtiments respectent ces nouvelles exigences de performances énergétiques.

Plusieurs approches existent à l'heure actuelle pour mesurer les performances énergétiques d'un bâtiment.

Une première approche est basée sur la mesure en laboratoire des performances énergétiques de composants élémentaires et des assemblages de composants élémentaires utilisés dans le bâtiment, pour créer une base de données de performances énergétiques théoriques. Connaissant les performances énergétiques de chaque composant élémentaire et de chaque assemblage de composants élémentaires, on réalise, pour un bâtiment donné, l'inventaire des composants élémentaires et des assemblages de composants élémentaires rencontrés dans le bâtiment, et des règles de calcul permettent ensuite de calculer une performance énergétique.

Cette approche présente l'inconvénient de calculer une valeur théorique de performance énergétique, basée sur des mesures en laboratoire, laquelle valeur théorique ne tient aucun compte des spécificités du bâtiment. De plus, les valeurs calculées en laboratoire pour des assemblages de composants élémentaires sont souvent éloignées des valeurs réelles de ces assemblages rencontrées dans un bâtiment. Cette méthode est par exemple décrite dans la norme NF EN 1946.

Une deuxième approche, décrite dans la demande de brevet français FR 2739931, consiste à mesurer la consommation énergétique des systèmes de chauffage d'un bâtiment pour maintenir le volume intérieur dudit bâtiment à une température déterminée.

Cette deuxième approche est meilleure que la première approche, car elle permet de mesurer, par l'intermédiaire de la consommation énergétique, un coefficient de transmission thermique du bâtiment dans son ensemble, et donc d'avoir une bonne idée des réelles performances énergétiques du bâtiment. Cette deuxième approche n'est donc plus entièrement théorique comme la première approche, et tient compte des spécificités du bâtiment par une mesure directe effectuée sur le bâtiment.

Cette deuxième approche présente cependant également des inconvénients. En effet, du fait que les systèmes de chauffage du bâtiment sont utilisés pour la mesure, le coefficient de transmission thermique calculé dépend de l'influence de ces systèmes de chauffage : le coefficient de transmission thermique de « l'enveloppe » seule du bâtiment, c'est-à-dire du bâtiment sans ses systèmes actifs consommant de l'énergie, ne peut donc pas être calculée.

De plus, avec cette deuxième approche, on ne peut pas mesurer un coefficient de transmission thermique pour n'importe quel sous-volume de bâtiment, mais uniquement celui des sous-volumes dotés d'un système de chauffage. En particulier, cette approche peut uniquement être utilisée pour des mesures réalisées l'hiver dans des bâtiments équipés d'un système de chauffage électrique.

Enfin, cette deuxième approche ne prend pas en compte les facteurs extérieurs au bâtiment qui influencent la mesure du coefficient de transmission thermique, tels que le rayonnement, les phénomènes d'inertie thermique, l'humidité. De ce fait, la valeur calculée du coefficient de transmission thermique est entachée d'une imprécision liée à ces facteurs extérieurs, dont cette deuxième approche ne tient pas compte.

Il existe donc un besoin pour un procédé et un système de mesure du coefficient de transfert thermique, simple, apte à surmonter les inconvénients de l'état antérieur de la technique, et permettant en particulier de pouvoir mesurer un coefficient de transfert thermique de l'enveloppe seule du bâtiment, non influencé par les systèmes dits actifs (un système actif du bâtiment est un système qui consomme de l'énergie), de pouvoir mesurer un coefficient de transfert thermique d'un sous-volume du bâtiment et de tenir compte de facteurs extérieurs d'environnement dans la valeur calculée du coefficient de transfert thermique.

Le procédé et le système de la présente invention permettent une mesure in-situ et non destructive du coefficient de transfert thermique pour un bâtiment ou un sous-ensemble de celui-ci.

Ils permettent également d'intégrer dans la mesure du coefficient de transfert thermique la contribution de tous les éléments physiques du bâtiment et de tous les assemblages de ces éléments physiques.

Enfin, dans certains modes de réalisation, l'invention permet de prendre en compte la totalité des phénomènes physiques mis en oeuvre dans les transferts thermiques (conduction, convection, rayonnement, changement de phases, etc).

L'invention peut notamment être mise en oeuvre lors de la réception d'un bâtiment neuf, pour vérifier si ses performances énergétiques sont conformes, pour la réalisation d'audits de bâtiments existants, pour la réception de travaux d'amélioration des performances énergétiques d'un bâtiment existant ou pour le suivi dans le temps de l'évolution des performances énergétiques d'un bâtiment.

Dans la présente demande, on désignera par le terme « local » un volume totalement séparé de l'extérieur ou d'autres volumes par des parois fixes (murs, cloisons, etc) ou mobiles (portes, fenêtres, etc). On désignera par le terme « bâtiment » une construction comprenant au moins un local. On désignera par « extérieur » l'espace atmosphérique environnant d'un bâtiment. On désignera par le terme « sous-volume » un ensemble de locaux, contigus ou non, d'un bâtiment, le sous-volume pouvant également être l'ensemble du bâtiment. On désignera enfin par le terme « enveloppe » d'un sous-volume le volume séparant un sous-volume de l'extérieur. L'enveloppe est constituée notamment des composants physiques du bâtiment (murs, portes, fenêtres, etc), des vides d'air, des locaux non-compris dans le sous-volume, et d'éléments extérieurs au bâtiment (sol, bâtiments mitoyens, etc). Lorsque le sous-volume désigne l'ensemble du bâtiment, son enveloppe est celle du bâtiment tout entier.

La présente invention a donc pour objet un procédé de mesure du coefficient de transfert thermique entre un sous-volume constitué soit d'un local, soit de plusieurs locaux, contigus ou non, d'un bâtiment ou soit de l'ensemble du bâtiment, et l'extérieur dudit bâtiment, ledit sous-volume étant séparé de l'extérieur du bâtiment par un volume appelé volume d'enveloppe du sous-volume, caractérisé par le fait qu'il comprend les opérations consistant à :

- placer dans le sous-volume un moyen de chauffage/climatisation autonome de rendement énergétique connu ;
- placer un ou plusieurs dispositifs de mesure dans le sous-volume et à l'extérieur du bâtiment, facultativement dans le volume d'enveloppe, pour mesurer au moins la température du sous-volume et la température à l'extérieur du bâtiment, et facultativement la température d'enveloppe, et pour mesurer la quantité d'énergie consommée par le moyen de chauffage/climatisation, lesdits dispositifs de mesure étant reliés à un dispositif de mémoire et de calcul permettant la mise en mémoire des mesures issues des différents dispositifs de mesure et des calculs à partir de celles-ci ;
- se placer dans les conditions de mesure dans lesquelles le bâtiment est inoccupé et aucun système du bâtiment ne consomme d'énergie , en dehors du moyen de chauffage/climatisation rapporté et des dispositifs de mesure ;
- choisir une température de consigne différente de la température de l'extérieur du bâtiment ;
- amener le sous-volume à la température de consigne à l'aide du moyen de chauffage/climatisation rapporté ;
- mesurer dans les conditions de mesure et à l'aide du ou des dispositifs de mesure, pendant une période de mesure à intervalles de temps rapprochés, la température du sous-volume, la température à l'extérieur du bâtiment, et facultativement la température du volume d'enveloppe, ainsi que la quantité d'énergie consommée par le moyen de chauffage/climatisation pour maintenir le sous-volume à la température de consigne ;
- calculer pour la période de mesure ou une sous-période de la période de mesure, à l'aide du dispositif de mémoire et de calcul, le coefficient de transfert thermique entre le sous-volume et l'extérieur dudit bâtiment à l'aide de la formule suivante :

$$H_{sous-volume/extérieur} = \frac{E \cdot \eta}{\left| T_i - T_e \right| \cdot t_E},$$

où $H_{sous-volume/extérieur}$ est le coefficient de transfert thermique entre le sous-volume et l'extérieur du bâtiment (en W/K),
E est l'énergie consommée dans le sous-volume pendant la durée $t_E$ (en W.h),
$\eta$ est le rendement énergétique du moyen de chauffage/climatisation,
$T_i$ est la température de consigne du sous-volume (en K) ; et
$T_e$ est la température à l'extérieur du bâtiment (en K).

Le moyen de chauffage/climatisation est distinct de ceux du bâtiment, c'est-à-dire complètement autonome. Il est rapporté dans le bâtiment pour la mesure et permet de s'affranchir de la nature du système de chauffage/climatisation présent dans le bâtiment. Avec le procédé de l'invention, on peut donc mesurer le coefficient de transfert thermique pour tout bâtiment tant l'été que l'hiver, quelle que soit la nature du système de chauffage/climatisation présent dans le bâtiment. L'utilisation d'un chauffage électrique se fera avec un rendement énergétique égal à 1. L'utilisation d'un système de climatisation nécessitera que le rendement énergétique soit connu au préalable par étalonnage.

La température de l'enveloppe peut ne pas être uniforme sur l'ensemble de l'enveloppe du sous-volume. On peut la mesurer en plusieurs points pour s'assurer que l'on est bien en régime stationnaire pendant la mesure.

Ce procédé de mesure permet, comme indiqué plus haut, de faire une mesure tenant compte des spécificités du bâtiment, sans influence des systèmes actifs du bâtiment. De plus, ce procédé de mesure est non-destructif.

Le procédé peut comprendre en outre l'opération consistant à déterminer, pour la période de mesure ou une sous-période de la période de mesure, une incertitude sur la valeur calculée du coefficient de transfert thermique sur la base des mesures de la température du sous-volume, de la température extérieure et facultativement de la température de l'enveloppe.

3

On peut ainsi associer à la valeur calculée de coefficient de transfert thermique pour un sous-volume une valeur d'incertitude.

Le procédé peut également comprendre en outre l'opération consistant à mesurer à l'aide des dispositifs de mesure, pendant la période de mesure, des facteurs d'environnement tels que le rayonnement lié à l'inertie thermique de composants dans le bâtiment et/ou des mouvements d'air et/ou un rayonnement énergétique et/ou le vent et/ou l'humidité et/ou l'inertie.

Une mesure à intervalles de temps rapprochés signifiera, dans le cadre de la présente invention, une mesure à intervalles de temps compris entre 1 mesure par seconde et 1 mesure par heure, de préférence entre 1 mesure toutes les 5 minutes et 1 mesure toutes les 15 minutes.

Le procédé peut également comprendre en outre l'opération consistant à déterminer, pour la période de mesure ou une sous-période de la période de mesure, une incertitude sur la valeur calculée du coefficient de transfert thermique sur la base des mesures des facteurs d'environnement.

Les facteurs d'environnement sont ainsi pris en compte dans l'incertitude sur la valeur de coefficient de transfert thermique calculée.

Le procédé peut également comprendre en outre les opérations consistant à diviser la période de mesure en une pluralité de sous-périodes de mesure, à déterminer une incertitude sur la valeur calculée du coefficient de transfert thermique pour chaque sous-période de mesure sur la base des mesures de la température du sous-volume, de la température extérieure, facultativement de la température de l'enveloppe, et, le cas échéant, de la mesure des facteurs d'environnement, et à associer à chaque valeur calculée du coefficient de transfert thermique son incertitude associée.

Le procédé peut également comprendre en outre l'opération consistant à affecter au coefficient de transfert thermique entre le sous-volume et l'extérieur dudit bâtiment la valeur calculée du coefficient de transfert thermique ayant l'incertitude la plus faible. La valeur ayant l'incertitude la plus faible est la valeur la plus fiable.

Selon un mode de réalisation, la température de consigne est constante.

Selon un mode de réalisation, la température de consigne est à variation dans le temps, notamment sinusoïdale (de période comprise entre environ une minute et un jour, de préférence de l'ordre d'une à quelques heures à un jour).

On peut ainsi caractériser dans le procédé selon l'invention d'autres caractéristiques de l'enveloppe, notamment son inertie.

Selon un autre mode de réalisation, on peut observer la variation de la température intérieure par l'intermédiaire d'une consigne consistant en la variation de la puissance fournie par le moyen de chauffage/climatisation, qui est également à variation dans le temps, notamment en créneaux ou sinusoïdale (de période comprise entre environ une minute et un jour, de préférence de l'ordre d'une à quelques heures à un jour).

L'invention a également pour objet un système pour la mise en oeuvre du procédé tel que défini ci-dessus, caractérisé par le fait qu'il comprend :

- un dispositif de mémoire et de calcul, doté d'une mémoire et d'un moyen de calcul exécutant un programme de calcul de coefficient de transfert thermique, ledit dispositif de mémoire et de calcul comprenant en outre un moyen d'entrée/sortie ;
- au moins un module extérieur, comprenant un ou plusieurs dispositifs de mesure de température et un moyen d'entrée/sortie apte à communiquer les mesures de température au moyen d'entrée/sortie du dispositif de mémoire et de calcul ;
- au moins un module sous-volume, comprenant au moins un moyen de chauffage/climatisation, un moyen de calcul de la quantité d'énergie consommée par le ou les moyens de chauffage/climatisation, un ou plusieurs dispositifs de mesure de température et un moyen d'entrée/sortie apte à communiquer les mesures d'énergie consommée par le ou les moyens de chauffage/climatisation et les mesures de température au moyen d'entrée/sortie du dispositif de mémoire et de calcul,

ledit ou lesdits modules extérieur et ledit ou lesdits modules sous-volume étant reliés au dispositif de mémoire et de calcul et communiquant à celui-ci leurs mesures par l'intermédiaire des moyens d'entrée/sortie pour le calcul du coefficient de transfert thermique selon le programme de calcul de coefficient de transfert thermique exécuté par le dispositif de mémoire et de calcul.

Le système peut comprendre en outre au moins un module enveloppe, comprenant un ou plusieurs dispositifs de mesure de température et un moyen d'entrée/sortie apte à communiquer les mesures de température au moyen d'entrée/sortie du dispositif de mémoire et de calcul, ledit ou lesdits modules enveloppe étant reliés au dispositif de mémoire et de calcul et communiquant à celui-ci leurs mesures par l'intermédiaire des moyens d'entrée/sortie pour le calcul du coefficient de transfert thermique selon le programme de calcul de coefficient de transfert thermique exécuté par le dispositif de mémoire et de calcul.

Chaque module peut comprendre en outre un ou plusieurs éléments de mesure supplémentaires parmi un anémomètre, un hygromètre, un pyromètre infrarouge, et est apte à communiquer les mesures de chaque élément de mesure supplémentaire au dispositif de mémoire et de calcul.

Le dispositif de mémoire et de calcul peut comprendre en outre un programme de calcul d'incertitude sur la valeur du coefficient de transfert thermique calculée par le programme du calcul du coefficient de transfert thermique.

Pour mieux illustrer l'objet de la présente invention, on va en décrire ci-après un mode de réalisation préféré, avec référence aux dessins annexés.

Sur ces dessins :

- la Figure 1 est un schéma des différents composants du système selon la présente invention, montrant leur disposition à l'intérieur et à l'extérieur d'un bâtiment ; et

- la Figure 2 est un organigramme du procédé selon la présente invention.

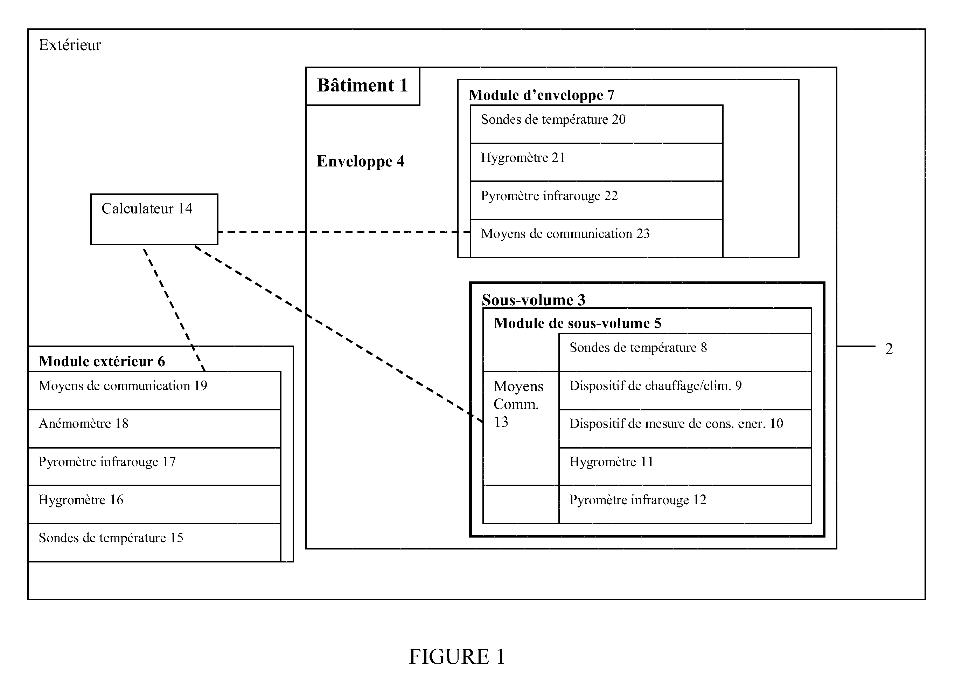

Si l'on se réfère à la Figure 1, on peut voir que l'on a représenté un schéma d'un système de mesure du coefficient de transfert thermique d'un bâtiment 1 selon la présente invention.

Le bâtiment 1 comprend une frontière 2 avec l'extérieur, ladite frontière 2, représentée schématiquement sur la Figure 1, étant constituée par des murs/cloisons, un toit, le sol, etc.

Un sous-volume 3 est défini dans le bâtiment 1, le sous-volume 3 étant constitué d'un ou plusieurs locaux, contigus ou non, du bâtiment 1. Le sous-volume 3 peut également être l'ensemble du volume intérieur du bâtiment 1. Le système selon l'invention permet de mesurer le coefficient de transfert thermique entre ce sous-volume 3 et l'extérieur du bâtiment 1.

Une enveloppe 4 sépare le sous-volume 3 du bâtiment 1 de l'extérieur. Ainsi, lorsque l'on mesure, avec le système et procédé de la présente invention décrits ci-après, le coefficient de transfert thermique entre le sous-volume 3 et l'extérieur du bâtiment 1, on mesure le coefficient de transfert thermique de l'enveloppe 4. A titre d'exemple, lorsque le sous-volume 3 du bâtiment 1 est l'ensemble du volume intérieur du bâtiment 1, l'enveloppe 4 correspond aux murs, cloisons intérieures comprises, au toit et au sol du bâtiment 1.

Le système de l'invention comprend un module de sous-volume 5, un module extérieur 6, et un module d'enveloppe 7, ce dernier module étant facultatif.

Dans le mode de réalisation du système de la présente invention représenté sur la Figure 1, le module de sous-volume 5 comprend une ou plusieurs sondes de température 8, pour mesurer la température du sous-volume 3 et de ses parois le séparant de l'enveloppe 4, un dispositif de chauffage/climatisation 9, autonome, un dispositif de mesure 10 de la consommation énergétique du dispositif de chauffage/climatisation 9, un hygromètre 11, un pyromètre infrarouge 12 et des moyens de communication 13, filaires ou sans-fil (de type Wifi ou Bluetooth par exemple), permettant de communiquer les mesures en temps réel à un calculateur 14, décrit plus en détail ci-après.

Lorsque le sous-volume 3 est constitué de plusieurs locaux du bâtiment 1 non contigus, il est nécessaire d'avoir au moins un module de sous-volume 5 dans chacun des locaux du bâtiment 1 constituant le sous-volume 3.

Le module extérieur 6 comprend une ou plusieurs sondes de température 15, pour mesurer la température extérieure et la température de la frontière 2 du bâtiment 1, côté extérieur du bâtiment 1, un hygromètre 16, un pyromètre infrarouge 17, un anémomètre 18, et des moyens de communication 19, filaires ou sans-fil (de type Wifi ou Bluetooth par exemple), permettant de communiquer les mesures en temps réel au calculateur 14, décrit plus en détail ci-après.

Le module d'enveloppe 7 comprend une ou plusieurs sondes de température 20, pour mesurer la température de l'enveloppe 4 et de ses parois la séparant de l'extérieur, côté intérieur du bâtiment 1, un hygromètre 21, un pyromètre infrarouge 22 et des moyens de communication 23, filaires ou sans-fil (de type Wifi ou Bluetooth par exemple), permettant de communiquer les mesures en temps réel au calculateur 14, décrit plus en détail ci-après.

Le calculateur 14 comprend des moyens de mémoire (type mémoire vive (statique (SRAM) ou dynamique (DRAM)) ou mémoire morte (ROM)), des moyens de calcul, de type microprocesseur ou microcontrôleur, une interface utilisateur (par exemple un clavier et/ou un écran) permettant de le programmer et d'accéder aux données stockées dans les moyens de mémoire, et des moyens de communication permettant de communiquer de manière filaire ou sans fil avec les moyens de communication du module de sous-volume 5, du module extérieur 6 et du module d'enveloppe 7.

Bien que le calculateur 14 ait été représenté schématiquement séparé du module de sous-volume 5, du module extérieur 6 et du module d'enveloppe 7, il est bien entendu qu'il peut faire partie d'un de ces modules, sans s'éloigner du cadre de la présente invention.

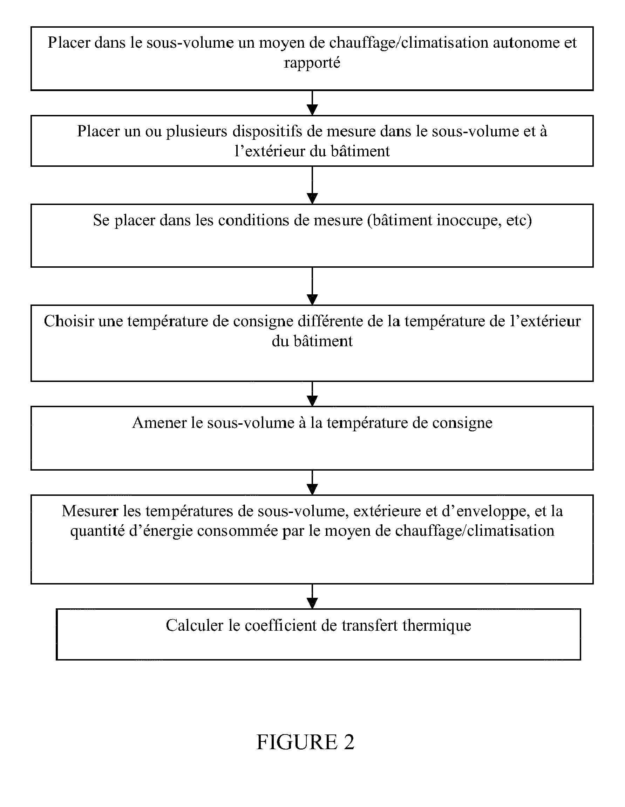

Si l'on se réfère à la Figure 2, on peut voir que l'on a représenté un organigramme d'un mode de réalisation préféré du procédé selon la présente invention.

Dans une étape préliminaire du procédé de l'invention, il est nécessaire de déterminer le sous-volume du bâtiment dont on souhaite mesurer le coefficient de transfert thermique avec l'extérieur. Encore une fois, le terme « sous-volume » peut également désigner dans le cadre de la présente invention l'ensemble du bâtiment.

Il est ensuite nécessaire de dimensionner les différents éléments des modules (modules de sous-volume, extérieur et d'enveloppe) du système décrit ci-dessus en fonction du sous-volume déterminé, et de placer ces modules pour la mesure (respectivement dans le sous-volume, à l'extérieur du bâtiment et dans l'enveloppe).

Les différents éléments de mesure des modules (sondes de température, hygromètres, anémomètre, pyromètres infrarouge) commencent alors à mesurer des valeurs, envoyées au calculateur, et mesureront en continu durant toute la période de mesure des valeurs, envoyées au calculateur.

Une mesure en continu signifiera, dans le cadre de la présente invention une mesure à intervalles de temps rapprochés, par exemple à intervalles de temps compris entre 1 mesure par seconde et 1 mesure par heure, de préférence entre 1 mesure toutes les 5 minutes et 1 mesure toutes les 15 minutes.

Dans le mode réalisation du procédé décrit ici, les valeurs de mesure sont envoyées au calculateur pendant la mesure. Le procédé selon la présente invention couvre cependant également le mode de réalisation dans lequel chaque module dispose d'un élément de mémoire qui stocke les valeurs pendant la période de mesure, les valeurs de mesure étant extraites des modules pour calcul après la mesure.

Il est ensuite nécessaire de se placer dans les conditions de mesure. Les conditions de mesure sont les conditions qui permettent de limiter les phénomènes perturbant la mesure du coefficient de transfert thermique (conduction, convection, rayonnement, humidité, inertie, etc.).

On se place ainsi dans les conditions où le bâtiment entier, et pas seulement le sous-volume sur lequel porte la mesure, est inoccupé et où les systèmes actifs du bâtiment (systèmes qui dégagent ou absorbent de l'énergie, et ceux qui induisent un transfert thermique), tels que les systèmes de chauffage/climatisation, les systèmes d'éclairage, les ordinateurs, les éventuels accessoires ménagers, etc, sont inactifs/éteints. On s'affranchit ainsi de l'influence de ces systèmes actifs pour ne faire porter la mesure que sur l'enveloppe de bâtiment elle-même.

De préférence, les conditions de mesure impliquent également une mesure de nuit, par ciel couvert, afin de limiter les phénomènes radiatifs du ciel. Une mesure en hiver permet de s'affranchir encore davantage des phénomènes inertiels et radiatifs de l'environnement extérieur (bâtiments voisins, sols au voisinage, etc), lesquels sont subis dans le cas d'un fort rayonnement solaire diurne. Une mesure en absence d'intempéries permet de limiter les phénomènes de chaleur latente. Enfin, une mesure par temps calme permettra de limiter les phénomènes convectifs.

On restera ensuite, durant toute la période de mesure, dans ces conditions de mesure.

En fonction de la température extérieure, on détermine ensuite une température de consigne pour la mesure.

De préférence, l'écart entre la température extérieure et la température de consigne sera au minimum de 20°C pour des bâtiments neufs fortement isolés, et de 5 à 10°C pour des bâtiments anciens faiblement isolés. L'écart de température favorise l'échange de chaleur entre le sous-volume sur lequel porte la mesure et l'extérieur.

Le sous-volume (qui peut être constitué de plusieurs locaux non contigus) sur lequel porte la mesure est ensuite préchauffé à la température de consigne.

Une fois la température de consigne atteinte en régime stationnaire, on mesure les différents paramètres (température de chaque local et température de ses parois, température extérieure, hygrométrie, rayonnement, vents) dans le sous-volume, l'enveloppe, à l'extérieur, ainsi que la quantité d'énergie consommée par le ou les dispositifs de chauffage/climatisation du ou des modules de sous-volume (suivant que le sous-volume est constitué d'éléments contigus ou pas) pour maintenir le sous-volume à la température de consigne.

La période de mesure est comprise entre quelques dizaines de minutes et plusieurs heures, et est de préférence de quelques heures, par exemple 8 heures.

En temps réel pendant la mesure ou à la fin de la période de mesure, on calcule le coefficient de transfert thermique du sous-volume avec la formule suivante :

$$H_{sous-volume/extérieur} = \frac{E \cdot \eta}{|T_i - T_e| t_E}, \qquad (1)$$

où $H_{sous-volume/extérieur}$ est le coefficient de transfert thermique entre le sous-volume et l'extérieur du bâtiment (en W/K),
$E$ est l'énergie consommée dans le sous-volume pendant la durée $t_E$ (en W.h),
$\eta$ est le rendement énergétique du moyen de chauffage/climatisation,
$T_i$ est la température de consigne du sous-volume (en K) ; et
$T_e$ est la température à l'extérieur du bâtiment (en K).

On calcule également une incertitude sur la valeur calculée du coefficient de transfert thermique, due aux facteurs d'environnement extérieurs, avec la formule suivante :

$$\Delta H_{totale} = \Delta H_{mesure} + \Delta H_{\text{échantillonnage}} \, ,$$

où

$\Delta H_{totale}$ représente le calcul d'incertitude totale (non exhaustif) sur le coefficient de transfert thermique entre le sous-volume et l'extérieur du bâtiment ;

$\Delta H_{mesure}$ représente le calcul d'incertitude (non exhaustif) lié aux mesures,

$\Delta H_{\text{échantillonnage}}$ représente le calcul d'incertitude lié à l'échantillonnage (spatial : nombre de capteurs à poser et/ou temporel : lorsqu'on effectue une fréquence des mesures allant de 1 mesure/5mn au plus à 1 mesure/15 mn au moins). Par exemple, avec la formule (1) ci-dessus,

$$\Delta H_{mesure} = (|\frac{\partial H}{\partial \eta}| \cdot \Delta \eta) + (|\frac{\partial H}{\partial T_{intérieur}}| \cdot \Delta T_{intérieur}) + (|\frac{\partial H}{\partial T_{extérieur}}| \cdot \Delta T_{extérieur}) + (|\frac{\partial H}{\partial E}| \cdot \Delta E) + (|\frac{\partial H}{\partial t_E}| \cdot \Delta t_E)$$

où $\frac{\partial H}{\partial x}$ représente de manière classique la dérivée partielle de H par rapport à la variable X et $\Delta x$ représente une variation de la variable x.

Facultativement, la période de mesure peut être découpée en sous-périodes de mesure, pour lesquelles un ou plusieurs paramètres restent sensiblement constants.

On calcule alors pour chaque sous-période de mesure une valeur de coefficient de transfert thermique à laquelle on associe une valeur d'incertitude. L'incertitude dépend des hypothèses faites pour les calculer : il appartient à l'homme du métier de déterminer celles à prendre en compte et celles à négliger.

Dans une dernière étape, on détermine le coefficient de transfert thermique du sous-volume comme étant la valeur de coefficient de transfert thermique calculée associée à l'incertitude la plus faible.

Si l'incertitude calculée est trop importante pour chaque valeur de coefficient de transfert thermique calculée, pour la période de mesure ou chacune de ces sous-périodes de mesure, alors il est nécessaire de reprocéder à une mesure.

Dans le cadre de la présente invention, on considère qu'une incertitude trop importante sur la mesure est une incertitude supérieure à 15 %.

**Revendications**

1. - Procédé de mesure du coefficient de transfert thermique entre un sous-volume constitué soit d'un local, soit de plusieurs locaux, contigus ou non, d'un bâtiment ou soit de l'ensemble du bâtiment, et l'extérieur dudit bâtiment, ledit sous-volume étant séparé de l'extérieur du bâtiment par un volume appelé volume d'enveloppe du sous-volume, **caractérisé par le fait qu'**il comprend les opérations consistant à :

   - placer dans le sous-volume un moyen de chauffage/climatisation autonome et de rendement énergétique connu ;
   - placer un ou plusieurs dispositifs de mesure dans le sous-volume et à l'extérieur du bâtiment, facultativement dans le volume d'enveloppe, pour mesurer au moins la température du sous-volume et la température à l'extérieur du bâtiment, et facultativement la température d'enveloppe, et pour mesurer la quantité d'énergie consommée par le moyen de chauffage/climatisation, lesdits dispositifs de mesure étant reliés à un dispositif de mémoire et de calcul permettant la mise en mémoire des mesures issues des différents dispositifs de mesure et des calculs à partir de celles-ci ;
   - se placer dans les conditions de mesure dans lesquelles le bâtiment est inoccupé et aucun système du bâtiment ne consomme d'énergie , en dehors du moyen de chauffage/climatisation rapporté et des dispositifs de mesure ;
   - choisir une température de consigne différente de la température de l'extérieur du bâtiment ;
   - amener le sous-volume à la température de consigne à l'aide du moyen de chauffage/climatisation rapporté ;
   - mesurer dans les conditions de mesure et à l'aide du ou des dispositifs de mesure, pendant une période de mesure à intervalles de temps rapprochés, la température du sous-volume, la température à l'extérieur du bâtiment, et facultativement la température du volume d'enveloppe, ainsi que la quantité d'énergie consommée par le moyen de chauffage/climatisation pour maintenir le sous-volume à la température de consigne ;

- calculer pour la période de mesure ou une sous-période de la période de mesure, à l'aide du dispositif de mémoire et de calcul, le coefficient de transfert thermique entre le sous-volume et l'extérieur dudit bâtiment à l'aide de la formule suivante :

$$H_{sous-volume/extérieur} = \frac{E \cdot \eta}{\left|T_i - T_e\right| t_E},$$

où $H_{sous-volume/extérieur}$ est le coefficient de transfert thermique entre le sous-volume et l'extérieur du bâtiment (en W/K),

$E$ est l'énergie consommée dans le sous-volume pendant la durée $t_E$ (en W.h),

$\eta$ est le rendement énergétique du moyen de chauffage/climatisation,

$T_i$ est la température de consigne du sous-volume (en K) ; et

$T_e$ est la température à l'extérieur du bâtiment (en K).

2. - Procédé selon la revendication 1, **caractérisé par le fait qu'**il comprend en outre l'opération consistant à déterminer, pour la période de mesure ou une sous-période de la période de mesure, une incertitude sur la valeur calculée du coefficient de transfert thermique sur la base des mesures de la température du sous-volume, de la température extérieure et facultativement de la température de l'enveloppe.

3. - Procédé selon la revendication 1 ou la revendication 2, **caractérisé par le fait qu'**il comprend en outre l'opération consistant à mesurer à l'aide des dispositifs de mesure, pendant la période de mesure, des facteurs d'environnement tels que le rayonnement lié à l'inertie thermique de composants dans le bâtiment et/ou des mouvements d'air et/ou un rayonnement énergétique et/ou le vent et/ou l'humidité et/ou l'inertie.

4. - Procédé selon la revendication 3, **caractérisé par le fait qu'**il comprend en outre l'opération consistant à déterminer, pour la période de mesure ou une sous-période de la période de mesure, une incertitude sur la valeur calculée du coefficient de transfert thermique sur la base des mesures des facteurs d'environnement.

5. - Procédé selon la revendication 2 ou revendication 4, **caractérisé par le fait qu'**il comprend en outre les opérations consistant à diviser la période de mesure en une pluralité de sous-périodes de mesure, à déterminer une incertitude sur la valeur calculée du coefficient de transfert thermique pour chaque sous-période de mesure sur la base des mesures de la température du sous-volume, de la température extérieure, facultativement de la température de l'enveloppe, et, le cas échéant, de la mesure des facteurs d'environnement, et à associer à chaque valeur calculée du coefficient de transfert thermique son incertitude associée.

6. - Procédé selon la revendication 5, **caractérisé par le fait qu'**il comprend en outre l'opération consistant à affecter au coefficient de transfert thermique entre le sous-volume et l'extérieur dudit bâtiment la valeur calculée du coefficient de transfert thermique ayant l'incertitude la plus faible.

7. - Procédé selon l'une quelconque des revendications 1 à 6, **caractérisé par le fait que** la température de consigne est constante.

8. - Procédé selon l'une quelconque des revendications 1 à 6, **caractérisé par le fait que** la température de consigne est à variation dans le temps, notamment sinusoïdale.

9. - Système pour la mise en oeuvre du procédé selon la revendication 1, **caractérisé par le fait qu'**il comprend :

- un dispositif de mémoire et de calcul, doté d'une mémoire et d'un moyen de calcul exécutant un programme de calcul de coefficient de transfert thermique, ledit dispositif de mémoire et de calcul comprenant en outre un moyen d'entrée/sortie ;
- au moins un module extérieur, comprenant un ou plusieurs dispositifs de mesure de température et un moyen d'entrée/sortie apte à communiquer les mesures de température au moyen d'entrée/sortie du dispositif de mémoire et de calcul ;
- au moins un module sous-volume, comprenant au moins un moyen de chauffage/climatisation, un moyen de calcul de la quantité d'énergie consommée par le ou les moyens de chauffage/climatisation, un ou plusieurs dispositifs de mesure de température et un moyen d'entrée/sortie apte à communiquer les mesures d'énergie consommée par le ou les moyens de chauffage/climatisation et les mesures de température au moyen d'entrée/ sortie du dispositif de mémoire et de calcul,

ledit ou lesdits modules extérieur et ledit ou lesdits modules sous-volume étant reliés au dispositif de mémoire et de calcul et communiquant à celui-ci leurs mesures par l'intermédiaire des moyens d'entrée/sortie pour le calcul du coefficient de transfert thermique selon le programme de calcul de coefficient de transfert thermique exécuté par le dispositif de mémoire et de calcul.

**10.** - Système selon la revendication 9, **caractérisé par le fait qu'**il comprend en outre au moins un module enveloppe, comprenant un ou plusieurs dispositifs de mesure de température et un moyen d'entrée/sortie apte à communiquer les mesures de température au moyen d'entrée/sortie du dispositif de mémoire et de calcul, ledit ou lesdits modules enveloppe étant reliés au dispositif de mémoire et de calcul et communiquant à celui-ci leurs mesures par l'intermédiaire des moyens d'entrée/sortie pour le calcul du coefficient de transfert thermique selon le programme de calcul de coefficient de transfert thermique exécuté par le dispositif de mémoire et de calcul.

**11.** - Système selon l'une des revendications 9 et 10, **caractérisé par le fait que** chaque module comprend en outre un ou plusieurs éléments de mesure supplémentaires parmi un anémomètre, un hygromètre, un pyromètre infrarouge, et est apte à communiquer les mesures de chaque élément de mesure supplémentaire au dispositif de mémoire et de calcul.

**12.** - Système selon l'une des revendications 9 à 11, **caractérisé par le fait que** le dispositif de mémoire et de calcul comprend en outre un programme de calcul d'incertitude sur la valeur du coefficient de transfert thermique calculée par le programme du calcul du coefficient de transfert thermique.

EP 2 674 737 A2

Extérieur

**Bâtiment 1**

**Module d'enveloppe 7**

| Sondes de température 20 |
| --- |
| Hygromètre 21 |
| Pyromètre infrarouge 22 |
| Moyens de communication 23 |

**Enveloppe 4**

Calculateur 14

**Sous-volume 3**

**Module de sous-volume 5**

| | Sondes de température 8 |
| --- | --- |
| Moyens Comm. 13 | Dispositif de chauffage/clim. 9 |
| | Dispositif de mesure de cons. ener. 10 |
| | Hygromètre 11 |
| | Pyromètre infrarouge 12 |

2

10

**Module extérieur 6**

| Moyens de communication 19 |
| --- |
| Anémomètre 18 |
| Pyromètre infrarouge 17 |
| Hygromètre 16 |
| Sondes de température 15 |

FIGURE 1

Placer dans le sous-volume un moyen de chauffage/climatisation autonome et rapporté

↓

Placer un ou plusieurs dispositifs de mesure dans le sous-volume et à l'extérieur du bâtiment

↓

Se placer dans les conditions de mesure (bâtiment inoccupe, etc)

↓

Choisir une température de consigne différente de la température de l'extérieur du bâtiment

↓

Amener le sous-volume à la température de consigne

↓

Mesurer les températures de sous-volume, extérieure et d'enveloppe, et la quantité d'énergie consommée par le moyen de chauffage/climatisation

↓

Calculer le coefficient de transfert thermique

FIGURE 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2739931